# EUROPEAN PATENT SPECIFICATION

(11) **EP 2 173 796 B1**
(45) Date of publication and mention of the grant of the patent: **21.03.2012**
(21) Application number: 08770762.6
(22) Date of filing: 12.06.2008
(51) Int. Cl.: C08J 9/00, C08J 9/14, C08L 25/04

(54) **CLOSED-CELL FOAM WITH LARGE CELL SIZE AND HIGH FILLER CONTENT**
GESCHLOSSENZELLIGER SCHAUM MIT GROSSER ZELLGRÖSSE UND HOHEM FÜLLERGEHALT
MOUSSE À CELLULES FERMÉES AYANT UNE GRANDE DIMENSION DE CELLULE ET UNE TENEUR ÉLEVÉE EN CHARGE

(30) Priority: 03.07.2007 US 958232 P
(43) Date of publication of application: 14.04.2010
(73) Proprietor: Dow Global Technologies LLC, Midland, MI 48674 (US)
(72) Inventor: BOSNYAK, Clive, P., Dripping Springs, TX 78620 (US); SHMIDT, Creston, D., Midland, MI 48640 (US); BEAUDOIN, Daniel, A., Midland, MI 48640 (US); SMITH, Roy, E., Midland, MI 48642 (US)
(74) Representative: Raynor, John
(86) International application number: PCT/US2008/066624
(87) International publication number: WO 2009/005984

(56) References cited:
- EP-A- 0 376 671
- WO-A-2008/069865
- US-A- 5 380 767
- "Standard Test Method for Apparent Density of Rigid Cellular Plastics D-1622-03", ASTM INTERNATIONAL, [Online] 2003, pages 1-4,
- "Standard Test Method for Apparent Density of Rigid Cellular Plastics D-1622-08", ASTM INTERNATIONAL, 2008, pages 1-4,
- "Standard Test Method for Cell Size of Rigid Cellular Plastics D-3576-04 (Reapproved 2010)", ASTM INTERNATIONAL, 2004, pages 1-5,
- "Standard Test method for Open Cell Content of Rigid Cellular Plastics D-6226-05", ASTM INTERNATIONAL, 2005, pages 1-7,

## Description

The present invention relates to thermoplastic polymer foam and a process for preparing such foam.

### Description of Related Art

Fillers act as a nucleating agents for blowing agent in polymer foam formulations. Nucleating agents seed cell formation during a foaming process. The more nucleating sites there are in a foamable composition during foaming, the more cells there are in the final foam and the smaller the average cell size in the foam. Therefore, fillers are useful for preparing a polymer foam having a small (less than 0.15 millimeter (mm)) average cell size. Fillers also increase the likelihood of forming an open cell structure, particularly at low foam density.

Fillers can be desirable for use in thermally insulating foams, for example, to reduce thermal conductivity. Infrared attenuating agents such as carbon black, graphite, titanium dioxide and metallic particles can serve to reduce the thermal conductivity through a foam when incorporated into the foam structure.

However, thermally insulating foams benefit from having a relatively large average cell size (greater than about 0.15 mm). Cell sizes below about 0.1 millimeters tend to be transparent to infrared radiation. Therefore, while fillers such as infrared attenuating agent are desirable for their ability to inhibit infrared transmittance, they tend to counteract their insulating contribution by causing a reduction in cell size.

United States patent (USP) 5,244,927 teaches the use of water as a blowing agent in order to increase cell size in polystyrene foam. However, use of water in a polystyrene foam is known to produce a bimodal cell size distribute in the foam. USP 5,240,968 and USP 5,210,105 both disclose polystyrene foams containing carbon black that are blown with water to achieve a bimodal cell size distribution. Water is also known to produce blowholes (also known as "pinholes") in a foam when used at a concentration exceeding the water solubility of polystyrene. Blowholes (or "pinholes") are voids the size of multiple cell diameters and easily observed by the naked eye. Blowholes often cause an undesirably irregular foam surface as the blowing agent rapidly erupts through the foam surface during the foaming process. Therefore, one of ordinary skill in the art would expect to achieve a bimodal cell size distribution and risk the presence of blowholes by including water as a blowing agent. Unimodal cell size distributions of cell sizes of 0.15 mm or greater are more desirable than bimodal cell size distributions for thermal insulating foams in order to maximize the number of cells that reflect infrared radiation.

Thermally insulting foams also benefit from having a low density (less than about 64 kilograms per cubic meter (kg/m³)) and closed cell structure (less than 30% open cell content). Decreasing a foam's density reduces the polymer component through which thermal energy may transfer from one side of the foam to an opposing side of the foam. A closed-cell structure also has cell walls inhibiting gas transport between cells; thereby inhibiting energy transport between cells. Unfortunately, fillers facilitate formation of high density open-cell structures.

It is desirable to be able to maximize the amount and, therefore, the benefits from fillers while still obtaining a large cell size (0.15 mm or more), a density below 64 kg/m³ and a unimodal closed-cell structure in a polymeric foam. It is particularly desirable to achieve such a foam using infrared attenuating agents as fillers and achieving a density of 64 kg/m³ or less in order to, for example, obtain a polymeric foam with exceptional thermal insulating properties.

### BRIEF SUMMARY OF THE INVENTION

The present invention is a result of discovering that preparing a foam using a polymer having a greater water solubility than polystyrene surprisingly enables preparation of a foam containing a high concentration of filler that has a large cell size (0.15 millimeters or greater), a density of less than 64 kg/m³ (even 48 kg/m³ or less) and closed-cell (less than 30% open cell content) unimodal cell structure by allowing an increase in water as a blowing agent without obtaining blowholes or multimodal cell size distribution and while obtaining the benefits but not detriments of high levels of filler.

In a first aspect, the present invention is an extruded polymer foam comprising one or more thermoplastic alkenyl-aromatic polymer and one or more filler, the one or more thermoplastic alkenyl-aromatic polymer accounting for 70 weight-percent or more of all polymer components in the polymer foam, containing less than 20 weight-percent covalently bound halogen based on the weight of any halogenated polymer and having a water solubility at 130°C and 101 kilopascals that is greater than 0.09 moles per kilogram of thermoplastic alkenyl-aromatic polymer and having a plurality of cells defined therein, wherein the polymer foam has: (a) less than 30 percent open cell content according to ASTM method D6226-05; (b) 5 weight-percent or more of a filler based on foam weight; (c) an average cell size of 0.15 millimeter or more according to ASTM method D-3756; (d) a density of less than 64 kilograms per cubic meter according to ASTM method D1622; and (e) a unimodal cell size distribution.

Preferred embodiments of the first aspect include one or more of the following additional characteristics: the foam at least one primary surface wherein at least 98% of any 200 square centimeter portion of the primary surface is free of random substantial defects; the thermoplastic alkenyl aromatic polymer has a polydispersity of less than 2.5; the filler being inorganic filler; the filler being present at a concentration of one weight-percent or more based on foam weight; the filler being present at a concentration of five weight-percent or more based on foam weight; the filler has an average particle size in the particle's smallest dimension of one micrometer or less and in all dimension of one millimeter or less; the foam being free of any alcohol or ether having from one to six carbons; and the foam being free of chlorinated blowing agents.

In a second aspect, the present invention is a process for preparing an extruded thermoplastic polymer foam, the process comprising: (a) providing a foamable composition in an extruder, the foamable composition comprising (i) one or more thermoplastic alkenyl-aromatic polymer composition, wherein the one or more thermoplastic alkenyl-aromatic polymer accounts for at least 70 weight-percent of all polymers in the foamable composition and contains less than 20 weight-percent covalently bound halogen based on the halogenated polymer weight and having a water solubility at 130°C and 101 kilopascals that is greater than 0.09 moles per kilogram of thermoplastic alkenyl-aromatic polymer; (ii) 5 weight-percent or more filler based on polymer composition weight; and (iii) 0.9 moles or more of a blowing agent composition per kilogram of foamable composition, the blowing agent composition comprising water such that the total amount of water in the foamable composition is equal to or less than the water solubility of the polymer composition; and (b) expanding the foamable composition into a polymer foam having less than 30% open cell content according to ASTM method D6226-05 and an average cell size of 0.15 millimeters or greater according to ASTM method D-3756 and a density of less than 64 kilograms per cubic meter according to ASTM method D1622.

Preferred embodiments of the second aspect include one or more of the following additional characteristics: the one or more alkenyl aromatic polymer has a polydispersity of less than 2.5; the one or more alkenyl aromatic polymer has a weight-average molecular weight of 50,000 to 200,000 grams per mole inclusive of endpoints; the filler is inorganic; the filler is present at a concentration of five weight-percent of more based on polymer composition weight; the filler has an average particle size in the particle's smallest dimension of one micrometer or less and in all dimension of one millimeter or less; the blowing agent is free of alcohols and ethers having from one to six carbons; the blowing agent composition contains a chlorine-free fluorinated blowing agent; and by the blowing agent composition being free of chlorinated blowing agents

Foams of the present invention are particularly useful as thermal insulation.

### DETAILED DESCRIPTION OF THE INVENTION

### Polymer Foam

The polymer foam of the present invention is an extruded thermoplastic polymer foam. Extruded thermoplastic polymer foams have a generally uniform polymer composition that serves as cell walls defining cells (spaces amongst the polymer composition that are free from polymer composition). An extruded foam structure is distinct from, for example, expanded "bead" foam structures. Expanded bead foam structures contain bead skins throughout the foam structure that surround groups of foam cells within the polymer foam structure. The bead skins are relatively dense walls of polymer, relative to other cell walls, corresponding to the bead shell prior to expanding into a foam structure. The bead shells coalesce during molding to form a foam of multiple expanded foam beads having a coalesced bead skin network extending throughout the foam. Bead foams tend to be friable along the coalesced bead skin network. Extruded foam structures are free from bead skins and so tend to be less friable than bead foams. Extruded foams desirably have a relatively uniform cell wall thickness throughout the foam. Notably, coalesced "strand" foams, foams of coalesced extruded strands of polymer foam, are types of extruded foam since they do not have bead skins that totally enclose groups of cells.

The polymer foam of the present invention comprises one or more thermoplastic alkenyl-aromatic polymer (for simplicity herein, "polymer composition" refers to the "one or more thermoplastic alkenyl-aromatic polymer" unless otherwise indicated), one or more filler and, optionally, one or more additional additive.

The polymer composition contains alkenyl-aromatic polymers that contain less than 20 weight-percent (wt%) covalently bonded halogens, based on the weight of the polymer containing the halogen. Alkenyl-aromatic polymers having greater 20 wt% or more covalently bonded halogens based on the weight of the polymer containing the halogen are considered "additional additives" in the present teaching and their effect on polymer composition properties are not included in characterizing the polymer composition.

The polymer composition has a water solubility greater than 0.09 moles per kilogram (mol/kg), preferably 0.15 mol/kg or greater, more preferably 0.20 mol/kg or greater, still more preferably 0.25 mol/kg or greater and typically 2.2 mol/kg or less at conditions of about 130 degrees Celsius and about 101 kilopascals (one atmosphere) pressure. Values of mol/kg are based on a kilogram of thermoplastic alkenyl-aromatic polymer composition.

The polymer composition accounts for 70 weight-percent (wt%) or more, preferably 80 wt% or more and can account for 90 wt% or more or even 100 wt% of all polymer components in the polymer foam (*that is,* based on the weight of all polymers in the polymer foam).

Polystyrene homopolymer has a water solubility of about 0.09 mol/kg at 130 degrees Celsius (°C) and 101 kilopascals (kPa) pressure. Therefore, the polymer composition has a greater water solubility than polystyrene.homopolymer at that the same temperature and pressure. The benefit of using a polymer with higher water solubility than polystyrene homopolymer is that the present process may employ more water (hence, more ideal environmentally friendly blowing agent) in the blowing agent than is possible with polystyrene homopolymer, while still achieving a unimodal cell size distribution and a good surface quality.

Polymer compositions contain multiple alkenyl-aromatic monomer units polymerized into the polymer structure. Suitable alkenyl-aromatic monomer units include styrene (vinyl benzene), alpha-methyl styrene, ethyl styrene, vinyl toluene, chlorostyrene and bromostyrene.

Suitable polymer compositions include homopolymer of alkenyl-aromatic monomer units, copolymers containing alkenyl aromatic monomer units (both graft and copolymerized copolymers) and blends of such homopolymers and/or copolymers with a miscible polymer that may or may not be an alkenyl-aromatic polymer (providing that at least 50 weight-percent (wt%) of the alkenyl-aromatic polymer composition comprises one or more alkenyl-aromatic polymer. "Copolymers" includes random copolymers, alternating copolymers and block copolymers. "Copolymers" may be linear and branched.

In order to achieve a water solubility greater than 0.09 mol/kg at 130°C and 101 kPa, the polymer composition must contain monomer units that provide a greater water solubility than polystyrene homopolymer when copolymerized with an alkenyl-aromatic monomer. That means the polymer composition does not consist entirely of polystyrene homopolymer. One of ordinary skill in the art can readily determine what monomer units achieve this result when copolymerized with an alkenyl-aromatic monomer. Examples of suitable copolymerizable monomers that enhance the water solubility of a styrene-based polymer when copolymerized with styrene include acrylic acid, methacrylic acid, ethacrylic acid, maleic acid, itaconic acid, acrylonitrile, maleic anhydride, methyl acrylate, ethyl acrylate, isobutyl acrylate, n-butyl acrylate, methyl methacrylate, vinyl acetate and butadiene.

Styrene-acrylonitrile copolymer (SAN) is a particularly desirable alkenyl aromatic thermoplastic polymer for use in the present invention because of its ease of manufacture and monomer availability. The SAN copolymer can be a block copolymer or a random copolymer, and can be linear or branched. SAN provides not only a higher water solubility than polystyrene homopolymer, but a higher heat distortion temperature as well. Desirable embodiments of the present process employ polymer compositions that comprise, even consist of SAN. The polymer composition may comprise or consist of a polymer blend of SAN with another polymer such as polystyrene homopolymer.

Whether the polymer composition contains only SAN, or SAN with other polymers, the acrylonitrile (AN) component of the SAN is desirably present at a concentration of one wt% or more, preferably five wt% or more, more preferably ten wt% or more based on the weight of all polymers in the polymer composition. The AN component of the SAN is desirably present at a concentration of fifty wt% or less, typically thirty wt% or less based on the weight of all polymers in the polymer composition. When AN is present at a concentration of less than one wt%, the water solubility improvement is minimal over polystyrene unless another hydrophilic component is present. When AN is present at a concentration greater than fifty wt%, the polymer composition tends to suffer from thermal instability while in a melt phase in an extruder.

In a particularly preferred embodiment of the present invention, the polymer composition comprises a blend of two or more polymers having a solubility parameter difference between any two of them of 0.2 or more and, if the solubility parameter difference is greater than 0.4 then a compatibilizer is present to bring the effective solubility parameter difference to between 0.2 and 0.4. The solubility parameter difference is in units of (calories) ^{0.5} per (grams ) ^{3/2} (*i.e*., cal^{0.5}/g^{3/2}) as calculated using the method of Small or Hoy (*see, e.g.,* J. Bandrup and E. H. Immergut, eds., POLYMER HANDBOOK, 4th edition, Section VII, pages 683-714). The polymer that is present in the highest concentration forms a continuous phase and the remaining polymers form discrete domains in the continuous phase.

A solubility difference of 0.2 to 0.4 ensures that the discontinuous polymer or polymers will form discrete domains of a suitably small size. The discrete domains each are of a size where at least one dimension of the discrete domain is up to (*i.e*., equal to or less than) 25% of the thickness of a cell wall of the present foam. Such a particle size dimension is desirable to keep the discrete domains from rupturing the cell wall and causing the foam to increase in open cell content. It is further desirably for the higher solubility parameter polymer to be present at a lower concentration than the lower solubility parameter polymer and serve as the discrete phase. In this further desired form of this embodiment, the discrete phase enhances water and carbon dioxide solubility in the polymer composition thereby providing necessary water solubility while maintaining the rheology and lower cost of a less water soluble polymer.

Typically, the polymers in the polymer composition have a weight-average molecular weight (Mw) of 40,000 g/mol or more, preferably 60,000 g/mol or more, more preferably, 75,000 g/mol or more. The Mw of the polymers are also generally 300,000 g/mol or less, preferably 250,000 g/mol or less, and more preferably 150,000 g/mol or less. It is desirable for 90% or more, preferably all of the polymers in the polymer foam to have a Mw of less than 1,000,000 g/mol. If the polymer Mw is too low the polymer composition has insufficient physical strength to provide foam integrity. If the polymer Mw is too high, the gel viscosity of the polymer is so high that it is difficult to foam, particularly at economically attractive rates.

The alkenyl aromatic polymer composition may contain a minor amount of polymer or other additives other than alkenyl aromatic polymers, provided that the minor amount is less than 20 percent by weight of the alkenyl-aromatic polymer composition. Alkenyl aromatic polymers that contain greater than 20 percent by weight of covalently bound halogens are considered additives that fall within the scope of "other additives".

The polymer composition may further have a polydispersity of less than 2.5, even 2.2 or less. Polydispersity is a ratio of the weight average molecular weight (Mw) to number average molecular weight (Mn) of a polymer.

The polymer foam is desirably a closed cell foam in order to maximize thermal insulation capability of the foam. A closed cell foam has an open cell content of 30% or less, preferably 20% or less, more preferably 10% or less, even more preferably 5% or less, still more preferably 2% or less, most preferably 1% or less. The polymer foam can have an open cell content of 0%. Measure open cell content according to ASTM method D6226-05.

Another advantage of the present foam's closed cell structure is that the foam can undergo steam expansion. Steam expansion is a process through which a closed cell foam can be further expanded to reduce its density by exposure to steam. To steam expand a foam expose it to steam for a certain period of time. Steam expansion is beneficial to achieve lower densities than readily achievable by direct extrusion (*e.g*., 23 kg/m³ or less, 20 kg/m³ or less, even 19 kg/m³ or less).

In addition to the polymer composition, the polymer foam contains one or more filler dispersed or blended within the polymer composition. "Filler" is a component that forms discrete phase domains in a polymer composition and remains as discrete phase domains within the polymer foam of the present invention. Fillers can be polymeric components. Desirable fillers for use in the present invention are inorganic fillers such as carbon black, graphite, talc, titanium dioxide, clay, and calcium carbonate. While fillers can be clay, the foam may also be free of clay. The fillers may be hydrophobic. Particularly desirable fillers are those that serve as infrared attenuating agents (IAAs) because they enhance the thermal insulating capability of the foam. Examples of IAAs include carbon black (including thermal black and lamp black), graphite, titanium dioxide and metal particulate.

Filler for use in the present invention desirably is a particulate that has an average size in the particle's smallest dimension of one micrometer or less and in all dimensions of one millimeter (mm) or less, preferably 0.5 mm or less, more preferably 0.1 mm or less. All dimension of the filler particles can be one micrometer or less.

Filler is present in a concentration of five wt% or more. Generally, filler is present at a concentration of 40 wt% or less, more typically 30 wt% or less and most typically 20 wt% or less. Filler concentration is based on total polymer composition weight.

Optionally, the polymer foam further comprises at least one additional additive. Additional additives include alkenyl-aromatic polymers containing 20 wt% or more covalently bound halogens; lubricants (for examples, calcium stearate and barium stearate); and flame retardants (for example brominated compounds such as hexabromocyclododecane, and brominated polymers; phosphorous-containing compounds such as triphenylphsphate; and halogenated compounds included halogenated polymers).

The polymer foam desirably has an average cell size of 0.15 mm) or greater, preferably 0.2 mm or greater. Cells smaller than 0.15 mm are largely transparent to infrared radiation and, as a result, tend to be ineffective at inhibiting infrared transmittance through the foam. Cells larger than about 0.15 mm tend to reflect infrared radiation and thereby contribute to the thermal insulating characteristics of the foam. Cell sizes are generally two millimeter or less, preferably one millimeter or less, more preferably 0.5 millimeters or less and still more preferably 0.4 millimeters or less. Cell sizes of greater than about 0.5 millimeters tend to allow cell gasses to undergo convection which reduces the thermal insulation property of the foam. Measure cell size according to ASTM method D-3756.

The polymer foam has a unimodal cell size distribution. A foam has a unimodal cell size distribution if a plot of number of cells (population) versus cell size (cell diameters rounded to nearest 0.05 mm) reveals a single peak. A foam is has a multimodal cell size distribution if such a plot has two or more peaks. Measure at least 100 cells from a cut foam surface to establish a plot for determining whether a foam is unimodal or multimodal. A peak occurs in such a plot at a given cell size if the population continues to decrease for two immediately smaller and two immediately larger cell sizes adjacent to the given cell size.

The extruded thermoplastic polymer foam has a density of less than 64 kg/m³, desirably 48 kilograms per cubic meter (kg/m³) or less, preferably 40 kg/m³ or less, more preferably 35 kg/m³ or less. Lower density foams are desirable because they are better thermal insulators than higher density foams. Typically, the extruded thermoplastic polymer foam has a density greater than 24 kg/m³ in order to have sufficient mechanical strength to preclude collapse when handling and in use

The polymeric foam preferably is free of alcohols and ethers that have from one to six carbon atoms. Such alcohols and ethers can serve as blowing agents for polymer foam, but also serve to plasticize a polymer foam. Plasticizing diminishes compressive strength of a thermoplastic foam, which can be detrimental for certain applications, particularly load bearing applications.

The polymeric foam desirably contains a halogenated blowing agent, particularly a fluorinated blowing agent such as 1,1,1,2-tetrafluoroethane. Such blowing agent serves to enhance the thermal insulating capability of the polymer foam. The polymeric foam is preferably free of chlorinated blowing agents. Chlorinated blowing agents tend to be more soluble in polymer than non-chlorinated blowing agents, which means chlorinated blowing agents nucleate less readily and more easily form large cell sizes. Nonetheless, chlorinated blowing agents are less desirable for the environment than fluorinated blowing agents.

It is desirably for the extruded polymer foam to have "long term thermal insulation capability," which means that the polymer foam has a thermal conductivity of 32 mW/m*K or less after 180 days aging according to ASTM method C518-04. Desirably, the polymer foam has a thermal conductivity of 30 mW/m*K or less, preferably 28 mW/m*K or less after the same period of time according to the same test method.

The polymer foam desirably has "good surface quality", which means that at least 98%, more preferably at least 99%, most preferably all of any 200 square centimeter portion of a primary surface area is free of random substantial defects. Determine percent of a surface that is free of random substantial defects by dividing the surface area that is free of random substantial defects by the total surface area (*i.e*., 200 square centimeters). A "primary" surface of a foam is a surface of the foam having the greatest planar surface area (area of surface projected onto a plane). A foam can have one or more than one primary surface. In its broadest meaning "substantial defect" is a deviation of 0.5 millimeters or more from a 200 square centimeter plane extending across a foam's primary surface and contacting the maximum amount of foam surface. In a particularly desirably embodiment of the present invention, "substantial defect" refers to deviations of 0.2 millimeters or more from a similar 200 square centimeter plane. A foam surface, for this determination, corresponds to polymer at a polymer-air interface when the foam is located in air. A defect is "random" if it is irregular, meaning that it appears as a singularity in size, shape and location on a foam's primary surface. Blowholes qualify as random deviations since their size, shape and location is unique in size, shape and location. In contrast, grooves that are intentionally incorporated into a foam surface by machining or choice of die design are examples of non-random deviations from planar and would not preclude a polymer foam from falling within the scope of the present invention. Similarly, regular perforations intentionally introduced into a foam surface do not qualify as "random" deviations from planar and would not preclude a foam from qualifying as a falling within the scope of the present invention.

### Process for Preparing Polymer Foam

In a second aspect, the present invention is an extrusion process for preparing thermoplastic foam. The process is suitable for forming the foam of the present invention.

The process comprises providing a foamable composition in an extruder and then expanding the foamable composition into a thermoplastic polymer foam. The process is an extrusion process that can be continuous or semi-continuous (*e.g*., accumulative extrusion). In a general extrusion process, prepare a foamable composition of a thermoplastic polymer with a blowing agent in an extruder by heating a thermoplastic polymer composition to soften it, mixing a blowing agent composition together with the softened thermoplastic polymer composition at a mixing temperature and pressure that precludes expansion of the blowing agent to any meaningful extent (preferably, that precludes any blowing agent expansion) and then expelling the foamable composition through a die into an environment having a temperature and pressure below the mixing temperature and pressure. Expansion of the foamable composition into a foam occurs upon expelling the foamable composition into the lower pressure and allowing the blowing agent to expand the thermoplastic polymer into a thermoplastic polymer foam. Desirably, cool the foamable composition after mixing and prior to expelling it through the die. In a continuous process, expel the foamable composition at an essentially constant rate into the lower pressure to enable essentially continuous expansion into a foam (foaming).

Accumulative extrusion is a semi-continuous process that comprises: 1) mixing a thermoplastic material and a blowing agent composition to form a foamable polymer composition; 2) extruding the foamable polymer composition into a holding zone maintained at a temperature and pressure which does not allow the foamable polymer composition to foam; the holding zone having a die defining an orifice opening into a zone of lower pressure at which the foamable polymer composition foams and an openable gate closing the die orifice; 3) periodically opening the gate while substantially concurrently applying mechanical pressure by means of a movable ram on the foamable polymer composition to eject it from the holding zone through the die orifice into the zone of lower pressure, and 4) allowing the ejected foamable polymer composition to expand to form the foam. USP 4,323,528, herein incorporated by reference, discloses such a process in a context of making polyolefin foams.

The foamable composition of the present process comprises a thermoplastic alkenyl-aromatic polymer composition (*that is,* "polymer composition"). The polymer composition is as described under the polymer foam aspect of the present invention.

The foamable composition also comprises 0.5 wt% or more of filler based on foamable composition weight. The filler is as described for the polymer foam aspect of the present invention. The filler may be present at a concentration of one wt% or more, even five wt% or more. Generally, filler is present at a concentration of 40 wt% or less, more typically 30 wt% or less and most typically 20 wt% or less. Filler wt% is based on foamable composition weight.

The foamable polymer composition further comprises 0.9 moles or more of a blowing agent composition per kilogram of foamable composition. The blowing agent composition contains water such that the extent of water in the foamable composition is equal to or less than the water solubility of the polymer composition. If water is present above the water solubility of the polymer composition, the process will produce foam having surface blowholes and/or a multimodal cell size. Foam of the present invention is desirably free of surface blowholes and has a unimodal cell size distribution.

The blowing agent composition can further contain any blowing agent suitable for extruded foam processes. Exemplary blowing agents include one or more of the following: inorganic gases such as carbon dioxide, argon, nitrogen, and air; organic blowing agents such as aliphatic and cyclic hydrocarbons having from one to nine carbons including methane, ethane, propane, n-butane, isobutane, n-pentane, isopentane, neopentane, cyclobutane, and cyclopentane; fully and partially halogenated aliphatic hydrocarbons having from one to five carbons including hydrochlorofluorocarbons (HCFCs), hydrofluorocarbons, (HFCs) and fluorocarbons; aliphatic alcohols having from one to five carbons such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid and chemical blowing agents such as azodicarbonamide, azodiisobutyronitrile, benzenesulfo-hydrazide, 4,4-oxybenzene sulfonyl semi-carbazide, p-toluene sulfonyl semi-carbazide, barium azodicarboxylate, N,N'-dimethyl-N,N'-dinitro-soterephthalamide, trihydrazino triazine and sodium bicarbonate.

The blowing agent composition desirably contains a chlorine-free fluorinated blowing agent such as difluoromethane (HFC-32), perfluoromethane, ethyl fluoride (HFC-161), 1,1,-difluoroethane (HFC-152a), 1,1,1-trifluoroethane (HFC-143a), 1,1,2,2-tetrafluoroethane (HFC-134), 1,1,1,2 tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1, 1, 1, 3, 3-pentafluorobutane (HFC-365mfc) since these blowing agents have low thermal conductivities and are relatively safe for the environment.

The blowing agent composition is preferably free of chlorinated blowing agents.

The foamable polymer composition may further comprise one or more additional additive, as described under the polymer foam aspect of the present invention.

Expansion of the foamable composition into a polymeric foam produces the polymeric foam of the present invention.

### Examples

The following examples serve to illustrate specific embodiments of the present invention.

Prepare the following Comparative Examples and Examples 1-6 using a pilot scale extrusion foam process. Into a 31.75 millimeter diameter single screw extruder that feeds a rotary mixer feed 100 weight-parts ("parts") of polymer (identified in below for each example), 0.90 parts of hexabromocyclododecane, 0.01 parts Hydrotalcite DHT4A, 0.02 parts NAUGUARD™ antioxidant (NAUGUARD is a trademark of Chemtura Corp.) 0.02 parts Thermcheck 832 thermal stabilizer, 0.20 parts barium stearate, 0.30 parts DOWLEX™ 2247 linear low density polyethylene (DOWLEX is a trademark of The Dow Chemical Company) and carbon black or talc as indicated for each example, below.

Add a blowing agent composition consisting of 0.69 mol/kg HFC-134a, 0.34 mol/kg carbon dioxide and 0.56 mol/kg water to the polymer components in the rotary mixer at a mixing temperature and mixing pressure as shown in Table 1 to prepare a foamable composition. Concentrations of mol/kg refer to moles of blowing agent per kilogram of polymer.

Cool the foamable composition and then discharge into atmospheric pressure (e.g., 101 kilopascals) and ambient temperature (e.g., 23°C) through a slot die at a foaming temperature, die pressure and at an extrusion rate (see Table 1). The expelled foamable composition expands into a polymeric foam. Process details and foam properties are in Table 1.

### Comparative Examples A-C: Polystyrene (PS) Foams

Prepare Comparative Examples A-C using a polystyrene homopolymer having a weight-averaged molecular weight (Mw) of 168,000 grams per mol (g/mol) and a water solubility of about 0.09 moles water per kilogram of polymer at 123 kilopascals.

Include as an additive 0.5 parts AROSPERSE-15 carbon black (AROSPERSE is a trademark of Degussa Engineered Carbons) in Comparative Example A, 6.0 parts AROSPERSE-15 in Comparative Example B and 0.5 parts Talc (399 Lo micron form WCD) in Comparative Example C. Process details and resulting foam properties are in Table 1.

### Examples 1-3: Styrene-Acrylonitrile (SAN) Foams

Prepare Examples 1-3 using a blend of two SAN copolymers, each having an acrylonitrile (AN) concentration of 15 weight-percent (wt%) based on SAN weight and a water solubility of 0.46 moles of water per kilogram of polymer at 123 kilopascals. The SAN blend consists of 50 wt% of an SAN having an average Mw of 118,000 g/mol and 50 wt% of an SAN having an average Mw of 144,000 g/mol. Neither SAN has a Mw component above 1,000,000 g/mol. The SAN blend has a polydispersity (Mw/Mn) of 2.2.

Include as an additive 0.5 parts AROSPERSE-15 carbon black in Example 1, 6.0 parts AROSPERSE-15 in Example 2 and 0.5 parts Talc (399 Lo micron form WCD) in Example 3. Process details and resulting foam properties are in Table 1.

### Examples 4-6: SAN/PS Blend Foams

Prepare Examples 4-6 using a polymer blend that is 30 wt% PS (as described for Comparative Examples, above) and 70 wt% SAN blend (as described for Examples 1-3).

Include as an additive 0.5 parts AROSPERSE-15 in Example 4, 6.0 parts AROSPERSE-15 in Example 5 and 0.5 parts Talc (399 Lo micron form WCD) in Example 6. The process details and resulting foam properties are in Table 1, below.

**Table 1.**

| | **Examples** | | | | | | | | |
|---|---|---|---|---|---|---|---|---|---|
| | Ex 1* | Ex 2 | Ex 3* | Ex 4* | Ex 5 | Ex 6* | Comp Ex A | Comp Ex B | Comp Ex C |
| **PROCESS INFORMATION** | | | | | | | | | |
| Extrusion Rate (kg/hour) | 18 | 18 | 23 | 18 | 18 | 23 | 18 | 18 | 23 |
| Mixing Temp. (°C) | 192 | 192 | 192 | 191 | 192 | 192 | 178 | 179 | 179 |
| Mixing Pressure (Megapascals) | 17.6 | 19.0 | 20.0 | 20.9 | 17.6 | 18.0 | 21.3 | 21.4 | 20.2 |
| Die Width (mm) | 12.7 | 12.7 | 12.7 | 12.7 | 12.7 | 12.7 | 12.7 | 12.7 | 12.7 |
| Die Gap (mm) | 1.07 | 1.09 | 0.94 | 1.14 | 1.14 | 1.03 | 0.72 | 0.72 | 0.65 |
| Foaming Temp (°C) | 130 | 130 | 130 | 128 | 128 | 128 | 126 | 126 | 126 |
| Die Pressure (bar) | 63 | 68 | 74 | 90 | 64 | 69 | 71 | 68 | 72 |

| **FOAM PROPERTIES** | | | | | | | | | |
|---|---|---|---|---|---|---|---|---|---|
| Thickness (mm) | 34.9 | 30.2 | 31.8 | 51.6 | 31.8 | 38.1 | 11.1 | 11.1 | 11.1 |
| Width (mm) | 57 | 43 | 48 | 33 | 51 | 49 | 38 | 38 | 40 |
| Density (kg/m³) | 30.3 | 35.0 | 27.0 | 32.7 | 35.0 | 31.9 | 46.1 | 43.2 | 38.5 |
| Average Cell size (mm) after 28 days | 0.39 | 0.15 | 0.18 | 0.22 | 0.16 | 0.16 | 0.04 | 0.04 | 0.04 |
| % Open Cell (ASTM D6226-05) | 3.24 | 1.11 | 0.97 | 2.23 | 1.56 | 1.55 | 6.71 | 66.22 | 69.5 |
| Blowholes? | No | No | No | No | No | No | Yes | Yes | Yes |
| Cell Size Distribution (Unimodal or Multimodal) | Uni | Uni | Uni | Uni | Uni | Uni | Uni | Uni | Uni |
| Surface Quality | Good | Good | Good | Good | Good | Good | Poor¹ | Poor¹ | Poor¹ |

| | | | | | | | | | |
|---|---|---|---|---|---|---|---|---|---|
| ¹Poor surface quality does not meet the qualifications necessary for "good surface quality" set forth above. * Not according to the claimed invention | | | | | | | | | |

Examples 1-6 illustrate foams and processes for preparing such foams that comprise at least 0.5 parts by weight of a filler per 100 parts by weight of polymer and that surprisingly have a density below 64 kg/m³, an average cell size of 0.15 mm or greater, an open cell content of 30% or less, a unimodal cell distribution, a good surface quality and no blowholes - despite using water as a blowing agent at a concentration greater than the solubility of water in polystyrene. Examples 1, 3, 4 and 6 are comparative examples.

The surprising result of Examples 1-6 is further illustrated by comparison to Comparative Examples A-C. In particular, compare Examples 1 and 4 with Comparative Example A (all having 0.5 parts carbon black); Examples 2 and 5 with Comparative Example B (all having 6.0 parts carbon black) and Examples 3 and 6 with Comparative Example C (all having 0.5 parts talc). The Comparative Examples illustrate an expected result from using such a high filler concentration - small average cell size and/or high open cell content. Furthermore, the Comparative Examples contain blowholes, which is typical of using high levels of water. Notably, the examples of the present invention do not contain blowholes and have large average cell sizes (0.15 mm or greater).

### Example 7: Larger Scale SAN Foam (Comparative)

Prepare Example 7 using a formulation similar to Examples 1, except use 4.0 parts of AROSPERSE-15. Use a 63.5 mm diameter extruder at an extrusion rate of 91 kg/hour. The mixing temperature is 197°C, mixing pressure is 13.6 MPa, die width is 50.8 mm, die gap is 2.03 mm, foaming temperature is 130°C and die pressure is 62 bar.

The resulting foam has a thickness of 25.4 mm and a width of 165 mm, density of 34.2 kg/m³, average cell size of 0.26 mm, open cell content of 0.6 percent, has good surface quality and is free of blow holes (or pinholes). The foam of Example 7 has a thermal conductivity after 330 days of 26.7 mW/m*K.

Example 7 illustrates a larger scale version of the present invention than Examples 1-6 using an SAN polymer composition.

## Claims

1. An extruded polymer foam comprising one or more thermoplastic alkenyl-aromatic polymer and one or more filler, the one or more thermoplastic alkenyl-aromatic polymer accounting for 70 weight-percent or more of all polymer components in the polymer foam, containing less than 20 weight-percent covalently bound halogen based on the weight of any halogenated polymer and having a water solubility at 130 °C and 101 kilopascals that is greater than 0.09 moles of water per kilogram of thermoplastic alkenyl-aromatic polymer and having a plurality of cells defined therein, wherein the polymer foam has:
(a) less than 30 percent open cell content according to ASTM method D6226-05;
(b) 5 weight-percent or more of a filler based on total polymer composition weight;
(c) an average cell size of 0.15 millimeter or more according to ASTM method D 3576;
(d) a density of less than 64 kilograms per cubic meter according to ASTM method D1622; and
(e) a unimodal cell size distribution.

2. The extruded polymer foam of Claim 1, further **characterized by** having at least one primary surface wherein at least 98% of any 200 square centimeter portion of the primary surface is free of random substantial defects.

3. The extruded polymer foam of Claim 1, wherein the thermoplastic alkenyl aromatic polymer has a polydispersity of less than 2.5.

4. The extruded polymer foam of Claim 1, further **characterized by** the filler being inorganic filler.

5. The extruded polymer foam of Claim 1, further **characterized by** the filler being present at a concentration of five weight-percent or more based on foam weight.

6. The extruded polymer foam of Claim 1, further **characterized by** the filler has an average particle size in the particle's smallest dimension of one micrometer or less and in all dimension of one millimeter or less.

7. The extruded polymer foam of Claim 1, further **characterized by** being free of any alcohol or ether having from one to six carbons.

8. A process for preparing an extruded thermoplastic polymer foam, the process comprising:
(a) providing a foamable composition in an extruder, the foamable composition comprising
(i) one or more thermoplastic alkenyl-aromatic polymer, wherein the one or more thermoplastic alkenyl-aromatic polymer accounts for at least 70 weight-percent of all polymers in the foamable composition and contains less than 20 weight-percent covalently bound halogen based on the halogenated polymer weight and having a water solubility at 130 °C and 101 kilopascals that is greater than 0.09 moles per kilogram of thermoplastic alkenyl-aromatic polymer;
(ii) 5 weight-percent or more filler based on total polymer composition weight; and
(iii) 0.9 moles or more of a blowing agent composition per kilogram of foamable composition, the blowing agent composition comprising water such that the total amount of water in the foamable composition is equal to or less than the water solubility of the polymer composition; and
(b) Expanding the foamable composition into a polymer foam having less than 30% open cell content according to ASTM method D6226-05 and an average cell size of 0.15 millimeters or greater according to ASTM method D 3576 and a density of less than 64 kilograms per cubic meter according tc ASTM method D1622.

9. The process of Claim 8, wherein the one or more alkenyl aromatic polymer has a polydispersity of less than 2.5.

10. The process of Claim 8, wherein the one or more alkenyl aromatic polymer has a weight-average molecular weight of 50,000 to 200,000 grams per mole inclusive of endpoints.

11. The process of Claim 8, wherein the filler is inorganic.

12. The process of Claim 8, wherein the filler is present at a concentration of five weight-percent of more based on polymer composition weight.

13. The process of Claim 8, wherein the filler has an average particle size in the particle's smallest dimension of one micrometer or less and in all dimension of one millimeter or less.

14. The process of Claim 8, wherein the blowing agent is free of alcohols and ethers having from one to six carbons.

15. The process of Claim 8, further **characterized by** the blowing agent composition being free of chlorinated blowing agents.

## Patentansprüche

1. Extrudierter Polymerschaum, der ein oder mehrere thermoplastische aromatische Alkenylpolymere und einen oder mehrere Füllstoffe enthält, wobei das eine oder die mehreren thermoplastischen aromatischen Alkenylpolymere 70 Gew.-% oder mehr der gesamten Polymerkomponenten in dem Polymerschaum ausmachen, weniger als 20 Gew.-% kovalent gebundenes Halogen, bezogen auf das Gewicht aller halogenierten Polymere, enthalten und eine Wasserlöslichkeit bei 130°C und 101 kPa aufweisen, die größer als 0,09 mol Wasser pro kg thermoplastisches aromatisches Alkenylpolymer ist, und eine Vielzahl von Zellen darin definiert aufweist, wobei der Polymerschaum:
(a) einen Gehalt an offenen Zellen gemäß ASTM Methode D6226-05 von weniger als 30%,
(b) 5 Gew.-% oder mehr eines Füllstoffes, bezogen auf das Gesamtgewicht der Polymerzusammensetzung,
(c) eine mittlere Zellgröße von 0,15 mm oder mehr gemäß ASTM Methode D 3576,
(d) eine Dichte von weniger als 64 kg/m³ gemäß ASTM Methode D1622 und
(e) eine unimodale Zellgrößenverteilung
hat.

2. Extrudierter Polymerschaum nach Anspruch 1, ferner **dadurch gekennzeichnet, dass** er mindestens eine Primäroberfläche aufweist, wobei mindestens 98% eines jeden 200-cm²-Abschnitts der Primäroberfläche frei von zufälligen wesentlichen Defekten sind.

3. Extrudierter Polymerschaum nach Anspruch 1, wobei das thermoplastische aromatische Alkenylpolymer eine Polydispersität von weniger als 2,5 aufweist.

4. Extrudierter Polymerschaum nach Anspruch 1, ferner **dadurch gekennzeichnet, dass** der Füllstoff ein anorganischer Füllstoff ist.

5. Extrudierter Polymerschaum nach Anspruch 1, ferner **dadurch gekennzeichnet, dass** der Füllstoff in einer Konzentration von 5 Gew.-% oder mehr, bezogen auf das Schaumgewicht, vorhanden ist.

6. Extrudierter Polymerschaum nach Anspruch 1, ferner **dadurch gekennzeichnet, dass** der Füllstoff eine mittlere Teilchengröße in der kleinsten Dimension des Teilchens von 1 µm oder weniger und in allen Dimensionen von 1 mm oder weniger aufweist.

7. Extrudierter Polymerschaum nach Anspruch 1, ferner **dadurch gekennzeichnet, dass** er frei von irgendwelchem Alkohol oder Ether mit 1 bis 6 Kohlenstoffatomen ist.

8. Verfahren zur Herstellung eines extrudierten thermoplastischen Polymerschaums, wobei das Verfahren umfasst:
(a) Bereitstellen einer aufschäumbaren Zusammensetzung in einem Extruder, wobei die aufschäumbare Zusammensetzung enthält:
(i) ein oder mehrere thermoplastische aromatische Alkenylpolymere, wobei das eine oder die mehreren thermoplastischen aromatischen Alkenylpolymere mindestens 70 Gew.-% aller Polymere in der aufschäumbaren Zusammensetzung ausmachen und weniger als 20 Gew.-% kovalent gebundenes Halogen, bezogen auf das Gewicht von halogeniertem Polymer, enthalten und eine Wasserlöslichkeit bei 130°C und 101 kPa aufweisen, die größer als 0,09 mol Wasser pro kg thermoplastisches aromatisches Alkenylpolymer ist;
(ii) 5 Gew.-% oder mehr Füllstoff, bezogen auf das Gesamtgewicht der Polymerzusammensetzung, und
(iii) 0,9 mol oder mehr einer Treibmittelzusammensetzung pro kg aufschäumbare Zusammensetzung, wobei die Treibmittelzusammensetzung Wasser enthält, so dass die Gesamtmenge von Wasser in der aufschäumbaren Zusammensetzung kleiner oder gleich der Wasserlöslichkeit der Polymerzusammensetzung ist, und
(b) Expandieren der aufschäumbaren Zusammensetzung zu einem Polymerschaum mit einem Gehalt an offenen Zellen von weniger als 30% gemäß ASTM Methode D6226-05 und einer mittleren Zellgröße von 0,15 mm oder größer gemäß ASTM Methode D 3576 und einer Dichte von weniger als 64 kg/m³ gemäß ASTM Methode D 1622.

9. Verfahren nach Anspruch 8, wobei das eine oder die mehreren aromatischen Alkenylpolymere eine Polydispersität von weniger als 2,5 aufweien.

10. Verfahren nach Anspruch 8, wobei das eine oder die mehreren aromatischen Alkenylpolymere ein gewichtsmittleres Molekulargewicht von 50.000 bis 200.000 g/mol, einschließlich der Endpunkte, aufweisen.

11. Verfahren nach Anspruch 8, wobei der Füllstoff anorganisch ist.

12. Verfahren nach Anspruch 8, wobei der Füllstoff in einer Konzentration von 5 Gew.-% oder mehr, bezogen auf das Gewicht der Polymerzusammensetzung, vorhanden ist.

13. Verfahren nach Anspruch 8, wobei der Füllstoff eine mittlere Teilchengröße in der kleinsten Dimension des Teilchens von 1 µm oder weniger und in allen Dimensionen von 1 mm oder weniger aufweist.

14. Verfahren nach Anspruch 8, wobei das Treibmittel frei von Alkoholen und Ethern mit 1 bis 6 Kohlenstoffatomen ist.

15. Verfahren nach Anspruch 8, ferner **dadurch gekennzeichnet, dass** die Treibmittelzusammensetzung frei von chlorierten Treibmitteln ist.

## Revendications

1. Mousse de polymère extrudée, comprenant un ou plusieurs polymère(s) thermoplastique(s) de type poly(alcényl-aromatique) et une ou plusieurs charge(s), lequel ou lesquels polymère(s) thermoplastique(s) de type poly(alcényl-aromatique) représente(nt) 70 % ou plus du poids de tous les polymères constituant la mousse de polymère, contient ou contiennent moins de 20 % d'halogène lié par liaison covalente, en poids rapporté au poids de tout polymère halogéné, et peut ou peuvent dissoudre de l'eau, à 130 °C et sous 101 kPa, en une quantité supérieure à 0,09 mole par kilogramme de polymère thermoplastique poly(alcényl-aromatique), et comportant de multiples cellules telles qu'ici définies, laquelle mousse de polymère présente :
a) une proportion de cellules ouvertes, mesurée selon le procédé de la norme ASTM D 6226-05, inférieure à 30 % ;
b) une teneur en charge de 5 % ou plus, en poids rapporté au poids total de la composition de polymère(s) ;
c) une taille moyenne de cellules, mesurée selon le procédé de la norme ASTM D 3576, supérieure ou égale à 0,15 mm ;
d) une masse volumique, mesurée selon le procédé de la norme ASTM D 1622, inférieure à 64 kg/m³ ;
e) et une distribution monomodale des tailles de cellules.

2. Mousse de polymère extrudée, conforme à la revendication 1, **caractérisée en outre en ce qu'**elle présente au moins une surface primaire où au moins 98 % de toute portion de 200 cm² de cette surface primaire est exempte de défauts substantiels aléatoires.

3. Mousse de polymère extrudée, conforme à la revendication 1, dans laquelle le polymère thermoplastique poly(alcényl-aromatique) présente un indice de polydispersité inférieur à 2,5.

4. Mousse de polymère extrudée, conforme à la revendication 1, **caractérisée en outre en ce que** la charge est une charge inorganique.

5. Mousse de polymère extrudée, conforme à la revendication 1, **caractérisée en outre en ce que** la charge s'y trouve présente en une proportion supérieure ou égale à 5 %, en poids rapporté au poids de la mousse.

6. Mousse de polymère extrudée, conforme à la revendication 1, **caractérisée en outre en ce que** les particules de charge présentent, dans leur plus petite dimension, une taille moyenne inférieure ou égale à 1 µm, et dans toutes leurs dimensions, une taille moyenne inférieure ou égale à 1 mm.

7. Mousse de polymère extrudée, conforme à la revendication 1, **caractérisée en outre en ce qu'**elle ne contient aucun alcool ou éther comportant 1 à 6 atomes de carbone.

8. Procédé de préparation d'une mousse de polymère thermoplastique extrudée, lequel procédé comporte les étapes suivantes :
a) introduire dans une extrudeuse une composition expansible en une mousse, laquelle composition comprend :
i) une composition d'un ou de plusieurs polymère(s) thermoplastique(s) de type poly(alcényl-aromatique), lequel ou lesquels polymère(s) thermoplastique(s) de type poly(alcényl-aromatique) représente(nt) au moins 70 % du poids de tous les polymères présents dans la composition expansible, contient ou contiennent moins de 20 % d'halogène lié par liaison covalente, en poids rapporté au poids de polymère halogéné, et peut ou peuvent dissoudre de l'eau, à 130 °C et sous 101 kPa, en une quantité supérieure à 0,09 mole par kilogramme de polymère(s) thermoplastique(s) poly(alcényl-aromatique),
ii) une charge, en une proportion de 5 % ou plus, en poids rapporté au poids total de la composition de polymère(s),
iii) et une composition d'agent d'expansion, en une quantité de 0,9 mole ou plus par kilogramme de composition expansible, laquelle composition d'agent d'expansion comprend de l'eau en une quantité telle que la quantité totale d'eau présente dans la composition expansible est inférieure ou égale à la quantité d'eau qui peut être dissoute dans la composition de polymère(s) ;
b) et faire que la composition expansible s'expanse en une mousse de polymère qui présente une proportion de cellules ouvertes, mesurée selon le procédé de la norme ASTM D 6226-05, inférieure à 30 %, une taille moyenne de cellules, mesurée selon le procédé de la norme ASTM D 3576, supérieure ou égale à 0,15 mm, et une masse volumique, mesurée selon le procédé de la norme ASTM D 1622, inférieure à 64 kg/m³.

9. Procédé conforme à la revendication 8, dans lequel le ou les polymère(s) poly(alcényl-aromatique) présente(nt) un indice de polydispersité inférieur à 2,5.

10. Procédé conforme à la revendication 8, dans lequel le ou les polymère(s) poly(alcényl-aromatique) présente(nt) une masse molaire moyenne en poids de 50 000 à 200 000 grammes par mole, bornes incluses.

11. Procédé conforme à la revendication 8, dans lequel la charge est une charge inorganique.

12. Procédé conforme à la revendication 8, dans lequel la charge est employée en une proportion de 5 % ou plus, en poids rapporté au poids de la composition de polymère(s).

13. Procédé conforme à la revendication 8, dans lequel les particules de charge présentent, dans leur plus petite dimension, une taille moyenne inférieure ou égale à 1 µm, et dans toutes leurs dimensions, une taille moyenne inférieure ou égale à 1 mm.

14. Procédé conforme à la revendication 8, dans lequel l'agent d'expansion ne contient aucun alcool ou éther comportant 1 à 6 atomes de carbone.

15. Procédé conforme à la revendication 8, **caractérisé en outre en ce que** la composition d'agent d'expansion ne contient aucun agent d'expansion chloré.
